# EUROPÄISCHE PATENTSCHRIFT

(11) **EP 1 455 966 B1**
(45) Veröffentlichungstag und Bekanntmachung des Hinweises auf die Patenterteilung: **15.08.2007**
(21) Anmeldenummer: 02794947.8
(22) Anmeldetag: 13.12.2002
(51) Int. Cl.: B21D 26/02

(54) **VERFAHREN ZUM INNENHOCHDRUCKUMFORMEN**
HYDROFORMING METHOD
PROCEDE DE FORMAGE PAR HAUTE PRESSION INTERNE

(30) Priorität: 21.12.2001 AT 20172001
(43) Veröffentlichungstag der Anmeldung: 15.09.2004
(73) Patentinhaber: ELB-Form GmbH, 6773 Vandans (AT)
(72) Erfinder: SCHUÖCKER, Dieter, A-1130 Wien (AT)
(74) Vertreter: Hofmann, Ralf U.
(86) Internationale Anmeldenummer: PCT/AT2002/000349
(87) Internationale Veröffentlichungsnummer: WO 2003/053607

(56) Entgegenhaltungen:
- EP-A- 0 703 019
- WO-A-00/64608
- CH-A- 673 603
- DE-C- 10 012 974
- PATENT ABSTRACTS OF JAPAN vol. 007, no. 063 (M-200), 16. März 1983 (1983-03-16) & JP 57 206530 A (AKIHIKO NAKAMURA), 17. Dezember 1982 (1982-12-17)

## Beschreibung

Die Erfindung betrifft ein Verfahren zum Innenhochdruckumformen von als Hohlkörper ausgebildeten Werkstücken mit Hilfe formgebender Matrizen.

Beim Innenhochdruckumformen wird ein als Ausgangsmaterial dienender Hohlkörper, also etwa ein zylindrisches Rohr, durch Füllung mit einem unter einem Druck von einigen Tausend Bar stehenden Wasser in eine Hohlform, etwa aus einer unteren und einer oberen Matrize bestehend, so hineingepresst, dass die Wand des Hohlkörpers die Gestalt der Aufnehmung der besagten Matrizen annimmt. Auf diese Art lassen sich Hohlkörper mit weitgehend beliebiger Gestalt rasch und preiswert erzeugen, was derzeit vor allen in der Automobilindustrie in steigendem Maße genützt wird. Beispiele für solche Teile sind etwa tragende Teile, wie Rahmen für die Karosserie, hohle Achsen etc. Die beiden Matrizen werden in einer Presse mit einer so großen Kraft gegeneinander gedrückt, dass der Wasserdruck kompensiert wird und damit die Form geschlossen bleibt.

Zum Einlegen der Vorform und zum Entnehmen des fertigen Werkstücks werden die beiden Matrizen dann auseinander genommen.

Problematisch ist der Prozess des Innhochdruckumformens u.a. dann, wenn schwer verformbare Werkstoffe, wie etwa hochfeste Stähle oder generell spröde Materialien, Kombinationen aus Materialien mit unterschiedlichen Festigkeiten, wie etwa Stahl und Aluminium oder Geometrien mit kleinen Krümmungsradius, d.h. etwa mit scharfen Bügen bearbeitet werden sollen, weil dann Risse oder Bruch des Materials an überbelasteten Stellen zustande kommen, so dass der hergestellte Teil unbrauchbar wird.

Herkömmlicherweise wurde daher teilweise bereits vorgesehen, das Innenhochdruckumformen mehrstufig durchzuführen. Nach einer jeweiligen Umformung wurde das Werkstück aus den Matrizen herausgenommen und als ganzes geglüht und sodann zur weiteren Umformung in entsprechende andere Matrizen gegeben. Der Vorgang des zwischengeschalteten Glühens kann dabei auch mehrmals zwischen jeweiligen Umformprozessen wiederholt werden. Ein solches mehrstufiges Innenhochdruckumformen ist allerdings relativ aufwendig.

Aufgabe der Erfindung ist es ein verbessertes Verfahren zum Innenhochdruckumformen bereitzustellen, wobei bisher nur schwer mögliche Umformprozesse vereinfacht werden oder zuverlässiger durchgeführt werden können oder überhaupt erst ermöglicht werden.

Erfindungsgemäß gelingt dies durch ein Verfahren mit den Merkmalen des Patentanspruchs 1.

Erfindungsgemäß kann somit die Umformung von herkömmlicherweise schwer umformbaren Stellen beim Innenhochdruckumformen dadurch verbessert werden, dass das Werkstück an diesen Stellen, also etwa am Übergang von schwer zu leicht verformbaren Materialien oder an Stellen, die im Zuge des Umformvorganges um kleine Krümmungsradien gebogen werden, also an Stellen an denen im Zuge des Umformvorganges besonders hohe Umformgrade erreicht werden müssen, durch die Absorption von Laserstrahlung während des Umformvorgangs selektiv erwärmt wird, wodurch die Fließspannung verringert und das Fließen erleichtert wird. Dabei muss nicht das ganze Werkstück erwärmt werden.

Die Erwärmung des Werkstücks beim Innenhochdruckumformen kann in einer vorteilhaften Ausführungsform der Erfindung so erfolgen, dass durch die Werkzeuge, also die Matrizen, dünne Kanäle führen und durch diese Kanäle lichtleitende Glasfasern geführt sind, die die von einem Laser oder von mehreren Lasern abgegebene Strahlung zur Innenseite des Werkstücks führen. Die Laserstrahlung tritt dort dann aus den Lichtleitern aus und trifft auf das in Verformung befindliche Werkstück auf, wird dort absorbiert, erhitzt das Werkstück und führt damit zu der oben besagten Erleichterung der Umformung.

Diesem sehr positiven Effekt steht allerdings entgegen, dass das für die Innenhochdruckumformung verwendete Wirkmedium, meist Wasser, mit hohem Druck die Innenwände des Werkstücks umspült und damit eine Ableitung der durch den Laser zugeführten Wärme zu befürchten ist, was den Nutzen der Laserbestrahlung verringert. Aus diesem Grunde ist als Wirkmedium, das durch seinen hohen Druck auf der Innenseite des Bauteils dessen Umformung bewirkt, bevorzugterweise an Stelle von Wasser ein schlecht wärmeleitendes Medium, etwa Öl oder andere, vorgesehen.

Anstelle eines schlecht wärmeleitenden Wirkmediums, wie etwa Öl, könnte auch zur Vermeidung eines Abflusses der durch den Laser dem Werkstück zugeführten Wärme die Innenseite des Rohlings, der ja zunächst ein an zwei Seiten offener Hohlkörper, also etwa ein zylindrisches Rohr ist, eine schlecht wärmeleitende Schicht aufgetragen werden, etwa durch Einführen eines Kunststoffrohres, dessen Außendurchmesser dem Innendurchmesser des Rohlings entspricht.

Auch eine Kombination dieser Maßnahmen ist denkbar und möglich. Obwohl eine nachteilige Wärmeabfuhr durch die Innenwände der Matrizen nicht sehr bedeutend sein sollte, da das Werkstück ja erst im letzten Moment der Umformung satt an diesen Wänden anliegt und nur in dieser Situation eine kräftige Kühlung durch die Matrizen stattfinden könnte, kann sicherheitshalber die Innenwand des Werkzeugs der Matrize ebenfalls mit einer schlecht wärmeleitenden Schicht, etwa aus Kunststoff, Keramik oder Glas bedeckt werden.

Die durch die Glasfasern zugeführte Laserstrahlung kann von einem zentralen Laser mit besonders hoher Leistung, dessen Strahlung auf mehrere Glasfasern aufgeteilt wird, erfolgen oder es können aber auch den einzelnen Glasfasern einzelne Laserdioden mit entsprechend geringerer Leistung zugeordnet sein. Darüber hinaus können in die oben genannten Kanäle, die bisher im Zusammenhang mit der Aufnahme von Glasfasern beschrieben waren, auch direkt hinter der Innenwand der Matrizen angeordnete Laserdioden mit einer Leistung, so wie sie auch durch die entsprechende Glasfaser zugeführt werden würde, angeordnet werden.

Weiters können am Ende der Glasfasern an der Innenseite der Matrizen auch strahlformende Elemente, wie etwa Linsen angeordnet werden, die die natürliche Aufspreizung des aus den Glasfasern austretenden Lichts entweder verringern oder verstärken, je nachdem, welcher Bereich der Werkstückoberfläche erwärmt werden soll.

Weitere Vorteile und Einzelheiten der Erfindung werden im folgenden anhand des in der beiliegenden Zeichnung dargestellten Ausführungsbeispiels erläutert.

Die einzige Figur zeigt eine schematische Darstellung eines Ausführungsbeispiels der Erfindung im Schnitt.

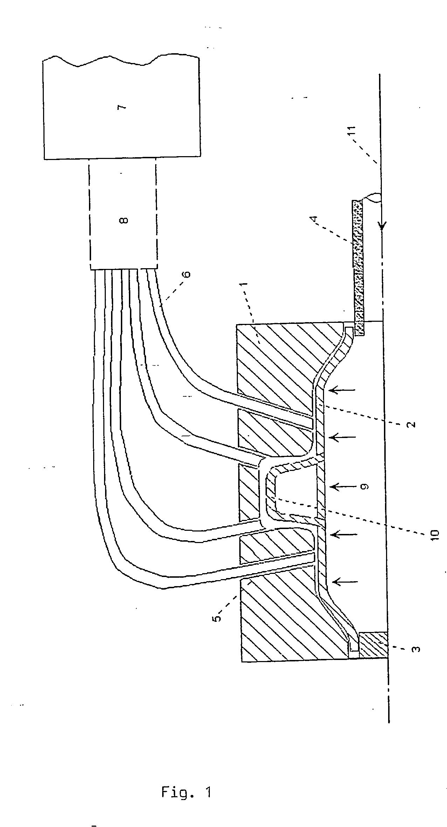

Aus Fig. 1 ist zunächst eine von der beiden formgebenden Matrizen 1 ersichtlich, die während des Umformens durch eine Presse (nicht dargestellt in Fig. 1) mit hoher Kraft an die untere Matrize, die in Fig. 1 ebenfalls nicht gezeigt ist, angedrückt wird, um dem Druck des Wirkmediums entgegenzuwirken. Die Innenform beider Matrizen entspricht genau der Außenform des herzustellenden Werkstücks, eines zylindrischen Rohres mit einer ebenfalls zylindrischen Erweiterung im hier beschriebenen Ausführungsbeispiel.

Vor dem Umformvorgang werden beide Matrizen voneinander entfernt und der zylinderförmige Rohling 2 eingelegt. Nach Zusammenfügen der beiden Matrizen mit der schon erwähnten hohen Pressenkraft wird dann die linke Seite des Rohlings mit einem Stopfen 3 hochdruckdicht verschlossen. Auf der rechten Seite wird eine Hochdruckleitung 4 zur Zufuhr des Wirkmediums 11, beispielsweise einem schlecht wärmeleitenden Medium, etwa Öl hochdruckdicht angeschlossen.

Die Matrize 1 enthält nun Kanäle 5, die an denjenigen Stellen der Matrize, wo das Werkstück erwärmt werden soll, die Innenseite der Matrize erreichen. Durch diese Kanäle sind Glasfasern 6 geführt, die mit einem Laser 7 verbunden sind und die einen Teil der vom Laser 7 abgegebenen Strahlung 8 zur Innenseite der Matrize und damit auch zu den genannten Stellen am Werkstück leiten. Das Werkstück wird nun an diesen Stellen erwärmt, wodurch seine Fließspannung sinkt, weil es erweicht wird, womit die Umformung erfindungsgemäß erleichtert werden kann und damit dem Auftreten von Rissen oder einem Bruch, die das Werkstück unbrauchbar machen, entgegengewirkt wird.

Das hier angegebene Ausführungsbeispiel beinhaltet klarerweise auch eine (hier nicht gezeigt) untere Matrize, die in diesem Ausführungsbeispiel analog zur gezeigten oberen Matrize Kanäle, durch die Lichtleiter zu den kritischen Stellen führen, aufweist. Obwohl bei diesem Ausführungsbeispiel die beiden Matrizen selbst an ihrer Außenseite keineswegs rotationssymmetrisch sind sondern zu der durch die Bauteilachse gehenden Symmetrieebene (s. Fig. 1) symmetrisch sind, ist die Innenseite der beiden aneinander gedrückten Matrizen rotationssymmetrisch gestaltet, wobei die die Laserstrahlung zuführenden Kanäle bzw. Lichtleiter symmetrisch über den Umfang (sternförmig) verteilt sind.

Aus Fig. 1 ist ersichtlich, dass bei Beginn der Umformung die Wand des zunächst noch nicht verformten Rohlings relativ weit vom Ende der Glasfasern auf der Innenseite der Matrize entfernt ist. Infolge der natürlichen Aufspreizung der die Glasfasern verlassenden Laserstrahlen führt dies zu einer relativ großflächigen und daher wenig effizienten Erwärmung des Werkstücks, was aber in der Anfangsphase der Umformung, wo die Fließspannung noch relativ gering ist, keine Rolle spielt. Mit zunehmender Verformung des Werkstücks nähert sich das Werkstück den Enden der Glasfasern, womit die auf die Werkstücke auftreffenden Laserstrahlen immer konzentrierter werden, was zu einer verstärkten Erwärmung führt, ein Umstand, der der Steigerung der Fließspannung mit fortschreitender Umformung durch Kaltverfestigung sehr gut angepasst ist. Auf Grund der besagten Kaltverfestigung besteht ja gerade im letzten Stadium der Verformung, bei der sich das Werkstück an die Innenwand der Matrize anlegt und damit die Außenfasern besonders stark gedehnt werden, die Gefahr des Brechens des Werkstücks. Dieser Effekt kann in vielen Anwendungsfällen durch die erfindungsgemäße selektive Laserbestrahlung mit Sicherheit verhindert werden.

## Patentansprüche

1. Verfahren zum Innenhochdruckumformen von als Hohlkörper ausgebildeten Werkstücken mit Hilfe formgebender Matrizen, **dadurch gekennzeichnet, dass** Laserstrahlung (8) zu einer Werkstückoberfläche eines in den formgebenden Matrizen (1) angeordneten Werkstückes (2) geführt wird, um dort an schwer umformbaren Stellen bzw. an Stellen des Werkstückes, die hohe Umformgrade erreichen, die Umformung durch eine selektive Erwärmung des Werkstücks zu erleichtern.

2. Verfahren nach Anspruch 1, **dadurch gekennzeichnet, dass** als Wirkmedium bei der Umformung nicht Wasser sondern ein schlecht wärmeleitendes Medium verwendet wird.

3. Verfahren nach Anspruch 1 und Anspruch 2, **dadurch gekennzeichnet, dass** zur Verminderung einer Wärmeableitung in die Matrizen (1) die Innenwände der Matrizen mit schlecht wärmeleitendem Material beschichtet werden.

4. Verfahren nach Anspruch 1 bis 3, **dadurch gekennzeichnet, dass** zur Verminderung einer Wärmeableitung vom Werkstück zum Wirkmedium vor dem Umformvorgang die Innenwand des Werkstückes mit schlecht wärmeleitendem Material beschichtet wird.

5. Verfahren nach einem der Ansprüche 1 bis 4, **dadurch gekennzeichnet, dass** die formgebenden Matrizen (1) zur Zuführung der Laserstrahlung zur Werkstückoberfläche Kanäle (5) aufweisen.

6. Verfahren nach einem der Ansprüche 1 bis 5, **dadurch gekennzeichnet, dass** die Laserstrahlung in Glasfasern, die durch Kanäle (5) der formgebenden Matrizen (1) verlaufen, zur Werkstückoberfläche geführt wird.

7. Verfahren nach Anspruch 6, **dadurch gekennzeichnet, dass** mehrere oder alle Glasfasern (6), welche zur Innenseite der Matrizen (1) führen, durch einen zentralen Laser (7) versorgt werden, dessen Strahl in Teilstrahlen aufgespalten wird.

8. Verfahren nach Anspruch 6, **dadurch gekennzeichnet, dass** mehrere oder alle Glasfasern (6), welche zur Innenseite der Matrizen (1) führen, durch einen eigenen Laser (7) versorgt werden.

9. Verfahren nach einem der Ansprüche 1 bis 8, **dadurch gekennzeichnet, dass** an den Eintritts- und/oder an den Austrittsstellen des Laserlichts in bzw. aus den Glasfasern (6) strahlformende Elemente angeordnet sind, die die natürliche Aufspreizung der Laserstrahlung verringern oder verstärken.

10. Verfahren nach einem der Ansprüche 1 bis 5, **dadurch gekennzeichnet, dass** am Ende von Kanälen (5) in den formgebenden Matrizen (1) oder in Erweiterungen dieser Kanäle (5) direkt hinter den Innenseiten der Matrizen Diodenlaser angeordnet sind, deren abgegebene Laserstrahlung auf die Werkstückoberfläche trifft.

## Claims

1. A method for shaping workpieces, constructed as hollow articles, by applying high pressure internally with the aid of shaping dies, **characterised in that** laser radiation (8) is supplied to a workpiece surface of a workpiece (2) arranged in the shaping dies (1) in order to facilitate shaping by means of selective heating of the workpiece at points that are difficult to shape or at points on the workpiece that undergo a high degree of shaping.

2. A method according to Claim 1, **characterised in that** the active medium used during the shaping is not water but a medium which has poor thermal conductivity.

3. A method according to Claim 1 and Claim 2, **characterised in that** to reduce heat dissipation to the dies (1) the inner walls of the dies are coated with material which has poor thermal conductivity.

4. A method according to Claims 1 to 3, **characterised in that**, to reduce heat dissipation from the workpiece to the active medium, before the shaping procedure the inner wall of the workpiece is coated with material which has poor thermal conductivity.

5. A method according to one of Claims 1 to 4, **characterised in that** the shaping dies (1) have channels (5) for supplying the laser radiation to the workpiece surface.

6. A method according to one of Claims 1 to 5, **characterised in that** the laser radiation is supplied to the workpiece surface in glass fibres which extend through channels (5) in the shaping dies (1).

7. A method according to Claim 6, **characterised in that** a plurality or all of the glass fibres (6) which lead to the inside of the dies (1) are supplied from a central laser (7) whereof the beam is split into component beams.

8. A method according to Claim 6, **characterised in that** a plurality or all of the glass fibres (6) which lead to the inside of the dies (1) are supplied from their own laser (7).

9. A method according to one of Claims 1 to 8, **characterised in that** beam-shaping elements are arranged at the entry and/or exit points of the laser light into and out of the glass fibres (6) and reduce or increase the natural spreading of the laser radiation.

10. A method according to one of Claims 1 to 5, **characterised in that** diode lasers are arranged at the end of channels (5) in the shaping dies (1) or in extensions to these channels (5), directly downstream of the insides of the dies, and the laser radiation emitted by these laser diodes impinges on the workpiece surface.

## Revendications

1. Procédé de formage par haute pression interne de pièces en forme de corps creux à l'aide de matrices de formage,
**caractérisé en ce qu'**
on conduit un faisceau laser (8) à la surface de la pièce (2) installée dans les matrices de formage (1) pour faciliter le formage par chauffage sélectif de la pièce à l'endroit ou aux endroits de la pièce difficilement déformables, pour obtenir des degrés de formage élevés.

2. Procédé selon la revendication 1,
**caractérisé en ce que**
comme milieu actif pour le formage on n'utilise pas de l'eau mais un milieu mauvais thermoconducteur.

3. Procédé selon les revendications 1 et 2,
**caractérisé en ce que**
on revêt les parois intérieures des matrices avec une matière mauvaise conductrice de chaleur pour réduire la conductivité thermique dans les matrices (1).

4. Procédé selon l'une des revendications 1 à 3,
**caractérisé en ce que**
avant l'opération de formage on revêt la paroi intérieure de la pièce mauvaise thermoconductrice pour réduire l'échange de chaleur de la pièce vers le milieu actif.

5. Procédé selon l'une des revendications 1 à 4,
**caractérisé en ce que**
les matrices de formage (1) comportent des canaux (5) pour conduire le faisceau laser à la surface de la pièce.

6. Procédé selon l'une des revendications 1 à 5,
**caractérisé en ce que**
le faisceau laser passe par des fibres de verre traversant les canaux (5) des matrices de formage (1) pour arriver à la surface de la pièce.

7. Procédé selon la revendication 6,
**caractérisé en ce que**
plusieurs ou toutes les fibres de verre (6) conduisant sur le côté intérieur des matrices (1) sont alimentées par un laser central (7) dont le faisceau est divisé en faisceaux partiels.

8. Procédé selon la revendication 6,
**caractérisé en ce que**
plusieurs ou toutes les fibres de verre (6) conduisant sur le côté intérieur des matrices (1) sont alimentées par un propre laser (7).

9. Procédé selon l'une des revendications 1 à 8,
**caractérisé en ce qu'**
aux points d'entrée et/ou de sortie du faisceau laser dans la ou les fibres de verre (6) on a des éléments de formation de faisceau qui diminuent ou amplifient l'étalement naturel du faisceau laser.

10. Procédé selon l'une des revendications 1 à 5,
**caractérisé en ce qu'**
à l'extrémité des canaux (5) dans les matrices de formage (1) ou dans les extensions des canaux (5), directement derrière la face intérieure des matrices, on a des diodes lasers dont le faisceau laser émis arrive à la surface de la pièce.
